# EUROPÄISCHE PATENTSCHRIFT

(11) **EP 0 522 310 B1**
(45) Veröffentlichungstag und Bekanntmachung des Hinweises auf die Patenterteilung: **11.09.1996**
(21) Anmeldenummer: 92110004.6
(22) Anmeldetag: 13.06.1992
(51) Int. Cl.: H04B 7/08

(54) **Steuereinrichtung für einen UKW-Empfänger mit mehreren Antennen**
Control apparatus for an FM receiver having plural antennas
Dispositif de commande pour récepteur FM à plusieurs antennes

(30) Priorität: 08.07.1991 DE 4122520
(43) Veröffentlichungstag der Anmeldung: 13.01.1993
(73) Patentinhaber: Blaupunkt-Werke GmbH, D-31132 Hildesheim (DE)
(72) Erfinder: Bochmann, Harald, Dr., W-3000 Hannover 21 (DE); Wiedemann, Kurt, W-3200 Hildesheim (DE); Eimertenbrink, Ralf, W-3000 Hannover (DE)

(56) Entgegenhaltungen:
- EP-A- 0 135 081
- EP-A- 0 319 782

## Beschreibung

Die Erfindung betrifft eine Steuereinrichtung für einen UKW-Empfänger mit mehreren Antennen nach dem Oberbegriff der Ansprüche 1 oder 2.

Bei einer derartigen aus der DE 37 41 698 A1, Figur 3, bekannten Steuereinrichtung wird das Ausgangssignal eines AM-Demodulators nach einer Filterung und Verstärkung den Eingängen von Mischern zugeführt. Die jeweils zweiten Mischereingänge werden von den Ausgangssignalen eines Phasendiskriminators gespeist, welche proportional zum Sinus bzw. Cosinus aus der Phasendifferenz zwischen den Signalen uᵢ und uₛ sind. Die in den Selektionsmitteln prinzipiell unvermeidliche Signalverzögerung von etwa 5 µs bewirkt, daß an den Mischereingängen die Informationen über die Phasenlage und über die Amplitude zeitlich nicht optimal zueinander passen.

Der Erfindung liegt die Aufgabe zugrunde, bei einer deratigen Steuereinrichtung das durch die Signalverzögerung der Selektionsmittel beeinträchtigte Regelverhalten zu verbessern.

Diese Aufgabe wird erfindungsgemäß durch die im kennzeichnenden Teil der Ansprüche 1 oder 2 angegebenen Maßnahmen gelöst.

Die mit der Erfindung erzielten Vorteile bestehen insbesondere darin, daß mit der Steuereinrichtung ein optimales Regelverhalten erreicht werden kann.

Vorteilhafte Ausgestaltungen der Erfindung sind in den Unteransprüchen angegeben.

Ausführungsbeispiele der Erfindung sind in den Zeichnungen dargestellt und werden im folgenden näher beschrieben.

Es zeigen:
- Fig. 1: eine Steuereinrichtung,
- Fig. 2: eine aktive Verzögerungsschaltung,
- Fig. 3: einen Allpaß mit einer Gruppenlaufzeit von etwa 5 µs,
- Fig. 4: einen passiven gruppenlaufzeitoptimierten Tiefpaß 5. Ordnung und
- Fig. 5: einen gruppenlaufzeitoptimierten Bandpaß

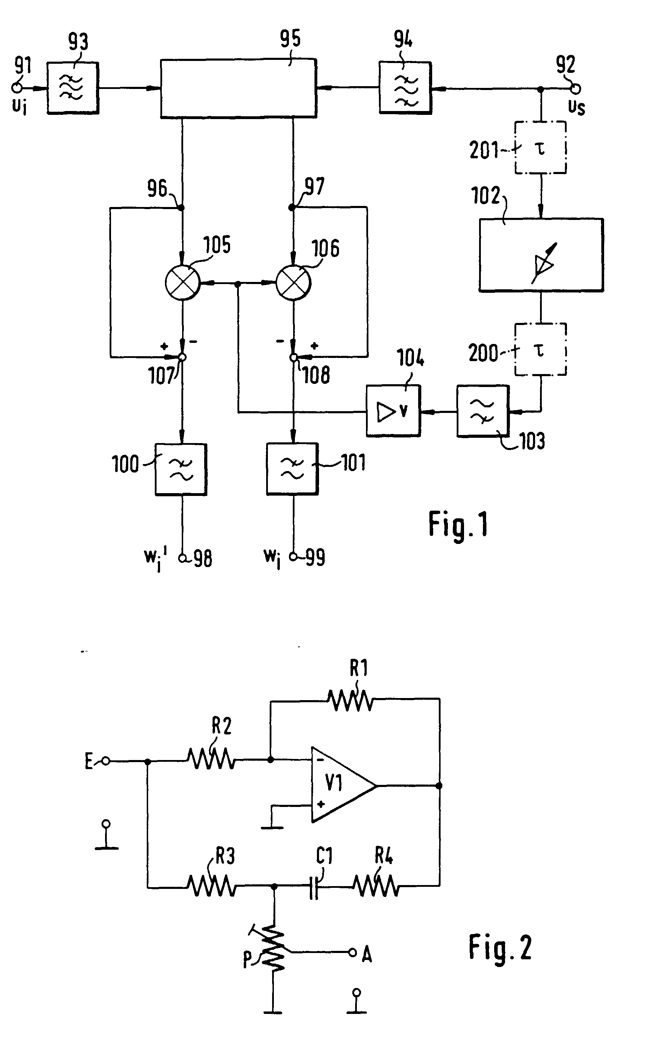

Bei einer in vereinfachter Form dargestellten Steuereinrichtung nach Fig. 1 werden zur Messung der Phasendifferenz zwischen dem jeweiligen Mischsignal uᵢ (i = 1 bis n) und dem Summensignal uₛ beide Signale über jeweils einen Eingang 91, 92 und einen Bandpaß 93, 94 einem Phasendiskriminator 95 zugeführt. Mit Hilfe der Bandpässe 93, 94 wird die Messung der Phasendifferenz auf das Nutzsignal beschränkt. Die Bandpässe 93, 94 beeinflussen zwar die Phasenlagen der Nutzsignale, infolge des symmetrischen Aufbaus ist der Einfluß auf beide zugeführten Signale im wesentlichen gleich, so daß eine Verfälschung des Meßergebnisses vernachlässigbar ist.

Der Phasendiskriminator 95 hat zwei Ausgänge 96, 97, an welchen jeweils Signale anstehen, die proportional zum Sinus bzw. proportional zum Cosinus des Phasenwinkels zwischen den Eingangssignalen des Phasendiskriminators sind. An den Ausgängen 98, 99 der nachgeschalteten Tiefpässe 100, 101 sind Steuerspannungen abnehmbar. Das Summensignal gelangt außerdem an den Eingang eines Amplitudendemodulators 102. Dabei umfaßt der Amplitudendemodulator einen geregelten Vorverstärker. Dieses und der nachgeschaltete Hochpaß 103 tragen dazu bei, daß der Modulationsgrad des Summensignals nahezu unabhängig vom mittleren Signalpegel ermittelt wird. Das Ausgangssignal des Hochpasses 103 wird um den Faktor v in einem Verstärker 104 verstärkt und zwei Mischern 105, 106 zugeführt, welche ferner mit den Ausgangssignalen des Phasendiskriminators 95 beaufschlagt sind. Die Ausgangssignale der Mischer 105, 106 werden in Subtrahierschaltungen 107 und 108 von den Ausgangssignalen des Phasendiskriminators 95 subtrahiert, wonach die Ergebnisse der Subtraktion tiefpaßgefiltert von den Ausgängen 98, 99 Multiplizierern zugeleitet werden, welche die Phasenlagen der zu addierenden Mischsignale steuern.

Da aufgrund der Signalverzögerungen in den Bandpässen 93 und 94 die Informationen an den Eingängen der Mischer 105 und 106 zeitlich nicht optimal zueinander passen, ist die Steuereinrichtung hinsichtlich ihres Regelverhaltens verbesserungswürdig.

Hier nun setzt die Erfindung ein. In einer ersten Version ist im Signalweg vom Ausgang des Amplitudendemodulators 102 zu den Eingängen des Mischers 105, 106 ein Verzögerungsglied 200 vorgesehen, das derart bemessen ist, daß es die durch die Bandpässe 93, 94 an den Eingängen der Mischer 105, 106 hervorgerufenen Signalverzögerungen ausgleicht. In einer zweiten Version ist dem Eingang des Amplitudendemodulators 102 ein Verzögerungsglied 201 vorgeschaltet, das ebenfalls so bemessen ist, daß es die durch die Bandpässe 93, 94 an den Eingängen der Mischer 105, 106 hervorgerufenen Signalverzögerungen ausgleicht.

Als Verzögerungsglied 200 kann eine aktive Verzögerungsschaltung nach Figur 2 dienen, die einen Operationsverstärker V1 aufweist, dessen nichtinvertierender Eingang mit Masse und dessen Ausgang über einen Widerstand R1 mit dem invertierenden Eingang verbunden ist. Der invertierende Eingang ist zudem über einen Widerstand R2 mit der Eingangsklemme E des Verzögerungsgliedes 200 verbunden, die über einen Widerstand R3 mit dem Hochpunkt eines an Masse liegenden, einstellbaren Spannungsteilers P verbunden ist, dessen Abgriff mit der Ausgangsklemme A verbunden ist. Der Hochpunkt des Spannungsteilers P ist außerdem über eine Reihenschaltung aus einem Kondensator C1 und einem Widerstand R4 mit dem Ausgang des Operationsverstärkers V1 verbunden.

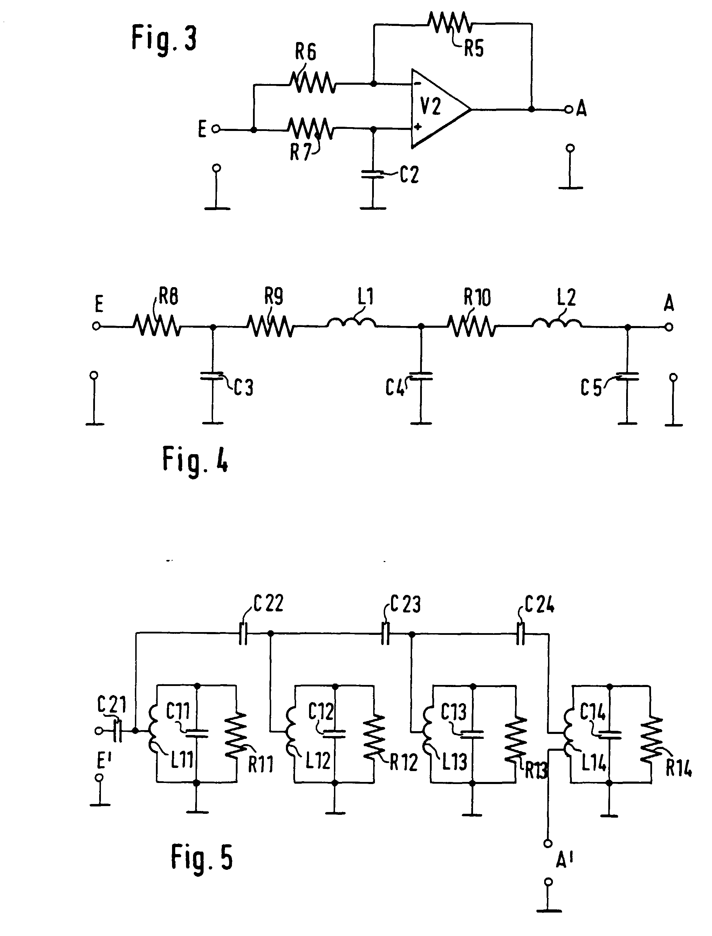

Als Verzögerungsglied 200 kann ferner ein Allpaß nach Figur 3 dienen, der einen Operationsverstärker V2 aufweist, dessen Ausgang einerseits mit der Ausgangsklemme A und andererseits über einen Widerstand R5 mit dem invertierenden Eingang verbunden ist, der über einen Widerstand R6 mit der Eingangsklemme A verbunden ist Der nichtinvertierende Eingang ist über einen Kondensator C2 mit Masse und über einen Widerstand R7 mit der Eingangsklemme E verbunden.

Das Verzögerungsglied 200 kann auch aus einem passiven gruppenlaufzeitoptimierten Tiefpaß nach Figur 4 bestehen. Bei diesem Tiefpaß ist die Eingangsklemme E über einen ersten Widerstand R8, einen zweiten Widerstand R9, eine erste Induktivität L1, einen dritten Widerstand R10 und eine zweite Induktivität L2 mit der Ausgangsklemme A verbunden. Die Verbindung zwischen dem ersten und dem zweiten Widerstand R8/R9 ist über einen ersten Kondensator C3 mit Masse verbunden. Die Verbindung zwischen der ersten Induktivität L1 und dem dritten Widerstand R10 ist über einen zweiten Kondensator C4 mit Masse verbunden. Die Ausgangsklemme A ist über einen dritten Kondensator C5 mit Masse verbunden.

Für ein im ZF-Signalweg angeordnetes Verzögerungsglied 201 kann ein gruppenlaufzeitoptimierter Bandpaß nach Figur 5 dienen, der vier aus Induktivitäten L11, L12, L13, L14, Kondensatoren C11, C12, C13, C14 und Dämpfungswiderständen R11, R12, R13, R14 gebildete, mit ihren Fußpunkten an Masse liegende Parallelschwingkreise aufweist. Die Eingangsklemme E' ist mit einem äußeren Anschluß von vier in Reihe geschalteten Kondensatoren C21, C22, C23, C24 versehen, wobei die der Eingangsklemme E' abgewandten Anschlüsse der Kondensatoren jeweils mit einem Anzapf der einzelnen Induktivitäten L11 bis L14 verbunden sind. Die Ausgangsklemme A' ist mit einer induktiven Auskopplung der Induktivität L14 verbunden.

Es sei an dieser Stelle darauf hingewiesen, daß sich die Ausbildung der Verzögerungsglieder 200, 201 nicht auf die dargestellten Ausführungsbeispiele beschränkt.

## Patentansprüche

1. Steuereinrichtung für einen UKW-Empfänger mit mehreren Antennen, insbesondere für ein Kraftfahrzeug, wobei das von jeder Antenne empfangene Signal mit einem im Empfänger erzeugten Träger gemischt wird und die somit entstandenen Mischsignale (Ui) mit steuerbarer Phasenlage zu einem Summensignal (Us) addiert werden, und die Phasenlagen der zu addierenden Mischsignale jeweils in Abhängigkeit der Phasendifferenz zwischen dem jeweiligen Mischsignal und dem Summensignal gesteuert werden, wobei für jedes der Mischsignale (Ui) ein Phasendiskriminator (95) vorgesehen ist, welchem einerseits das Mischsignal und andererseits das Summensignal über je einen Bandpaß (93, 94) zuführbar sind, und der Phasendiskriminator über einen Ausgang für die Sinusfunktion der Phasendifferenz und einen Ausgang für die Cosinusfunktion der Phasendifferenz aufweist und den Ausgängen je ein Tiefpaß (100, 101) nachgeschaltet ist, wobei zwischen die Ausgänge des Phasendiskriminators und die Tiefpässe je eine Reihenschaltung aus einem Mischer (105, 106) und einer Subtrahierschaltung (107, 108) eingefügt ist und den Subtrahierschaltungen einerseits die Ausgangssignale der Mischer (105, 106) und andererseits die Ausgangssignale des Phasendiskriminators zuführbar sind, und den Mischern (105, 106) ferner das amplitudendemodulierte Summensignal zugeführt ist,
dadurch gekennzeichnet,
daß das in einem AM-Demodulator (102) amplitudendemodulierte Summensignal den Mischern (105, 106) über ein Verzögerungsglied (200) zugeführt ist, welches derart bemessen ist, daß es durch die Bandpässe (93, 94) an den Eingängen der Mischer (105, 106) hervorgerufene Signalverzögerungen ausgleicht.

2. Steuereinrichtung für einen UKW-Empfänger mit mehreren Antennen, insbesondere für ein Kraftfahrzeug, wobei das von jeder Antenne empfangene Signal mit einem im Empfänger erzeugten Träger gemischt wird und die somit entstandenen Mischsignale (Ui) mit steuerbarer Phasenlage zu einem Summensignal (Us) addiert werden, und die Phasenlagen der zu addierenden Mischsignale jeweils in Abhängigkeit der Phasendifferenz zwischen dem jeweiligen Mischsignal und dem Summensignal gesteuert werden, wobei für jedes der Mischsignale (Ui) ein Phasendiskriminator (95) vorgesehen ist, welchem einerseits das Mischsignal und andererseits das Summensignal über je einen Bandpaß (93, 94) zuführbar sind, und der Phasendiskriminator über einen Ausgang für die Sinusfunktion der Phasendifferenz und einen Ausgang für die Cosinusfunktion der Phasendifferenz aufweist und den Ausgängen je ein Tiefpaß (100, 101) nachgeschaltet ist, wobei zwischen die Ausgänge des Phasendiskriminators und die Tiefpässe je eine Reihenschaltung aus einem Mischer (105, 106) und einer Subtrahierschaltung (107, 108) eingefügt ist und den Subtrahierschaltungen einerseits die Ausgangssignale der Mischer (105, 106) und andererseits die Ausgangssignale des Phasendiskriminators zuführbar sind, und den Mischern (105, 106) ferner das amplitudendemodulierte Summensignal zugeführt ist,
dadurch gekennzeichnet,
daß einem das amplitudendemodulierte Summensignal erzeugenden AM-Demodulator (102) ein Verzögerungsglied (201) vorgeschaltet ist, welches derart bemessen ist, daß es durch die Bandpässe (93, 94) an den Eingängen der Mischer (105, 106) hervorgerufene Signalverzögerungen ausgleicht.

3. Steuereinrichtung für einen UKW-Empfänger nach einem der Ansprüche 1 oder 2,
dadurch gekennzeichnet,
daß die Signalverzögerung des Verzögerungsgliedes (200, 201) der Signalverzögerung der Bandpässe (93, 94) entspricht.

4. Steuereinrichtung für einen UKW-Empfänger nach Anspruch 1,
dadurch gekennzeichnet,
daß das dem Amplitudendemodulator (102) nachgeschaltete Verzögerungsglied (200) einen Operationsverstärker (V1) aufweist, dessen nichtinvertierender Eingang mit Masse und dessen Ausgang über einen Widerstand (R1) mit dem invertierenden Eingang verbunden ist, daß der invertierende Eingang über einen Widerstand (R2) mit der Eingangsklemme (E) verbunden ist, die über einen Widerstand (R3) mit dem Hochpunkt eines an Masse liegenden einstellbaren Spannungsteilers (P) verbunden ist, dessen Abgriff mit der Ausgangsklemme (A) verbunden ist, und daß der Hochpunkt des Spannungsteilers (P) über eine Reihenschaltung aus einem Kondensator (C1) und einem Widerstand (R4) mit dem Ausgang des Operationsverstärkers (V1) verbunden ist.

5. Steuereinrichtung für einen UKW-Empfänger nach Anspruch 2,
dadurch gekennzeichnet,
daß das dem Amplitudendemodulator (102) vorgeschaltete Verzögerungsglied (201) mehrere aus Induktivitäten (L11, L12, L13, L14) und Kondensatoren (C11, C12, C13, C14) gebildete breitbandige Parallelschwingkreise aufweist, daß die Eingangsklemme (E') mit einem äußeren Anschluß von mehreren in Reihe geschalteten Kondensatoren (C21, C22, C23, C24) versehen ist, wobei die der Eingangsklemme (E') abgewandten Anschlüsse der Kondensatoren (C21 bis C24) jeweils mit einem Anzapf der einzelnen Induktivitäten (L11 bis L14) verbunden sind.

## Claims

1. Control device for a VHF receiver having a plurality of antennas, in particular for a motor vehicle, the signal which is received by each antenna being mixed with a carrier which is produced in the receiver, and the mixed signals (Ui) which are obtained in this manner are added with a controllable phase angle to a sum signal (Us), and the phase angles of the mixed signals to be added are in each case controlled as a function of the phase difference between the respective mixed signal and the sum signal, a phase discriminator (95) being provided for each of the mixed signals (Ui), to which phase discriminator (95) the mixed signal can be supplied on the one hand and the sum signal on the other hand, via in each case one bandpass filter (93, 94), and the phase discriminator has an output for the sine function of the phase difference and an output for the cosine function of the phase difference and in each case one low-pass filter (100, 101) is connected downstream of the outputs, in each case one series circuit formed from a mixer (105, 106) and a subtraction circuit (107, 108) being inserted between the outputs of the phase discriminator and the low-pass filters, and it being possible to supply to the subtraction circuits on the one hand the output signals from the mixers (105, 106) and on the other hand the output signals from the phase discriminator, and the amplitude-demodulated sum signal furthermore being supplied to the mixers (105, 106), characterized in that the sum signal which is amplitude-demodulated in an AM demodulator (102) s supplied to the mixers (105, 106) via a delay element (200) which is designed in such a manner that it compensates for signal delays caused by the bandpass filters (93, 94) at the inputs of the mixers (105, 106).

2. Control device for a VHF receiver having a plurality of antennas, in particular for a motor vehicle, the signal which is received by each antenna being mixed with a carrier which is produced in the receiver, and the mixed signals (Ui) which are obtained in this manner are added with a controlable phase angle to a sum signal (Us), and the phase angles of the mixed signals to be added are in each case controlled as a function of the phase difference between the respective mixed signal and the sum signal, a phase discriminator (95) being provided for each of the mixed signals (Ui), to which phase discriminator (95) the mixed signal can be supplied on the one hand and the sum signal on the other hand, via in each case one bandpass filter (93, 94), and the phase discriminator has an output for the sine function of the phase difference and an output for the cosine function of the phase difference and in each case one low-pass filter (100, 101) is connected downstream of the outputs, in each case one series circuit formed from a mixer (105, 106) and a subtraction circuit (107, 108) being inserted between the outputs of the phase discriminator and the low-pass filters, and it being possible to supply to the subtraction circuits on the one hand the output signals from the mixers (105, 106) and on the other hand the output signals from the phase discriminator, and the amplitude-demodulated sum signal furthermore being supplied to the mixers (105, 106), characterized in that a delay element (201) is connected upstream of an AM demodulator (102) which produces the amplitude-demodulated sum signal, which delay element (201) is designed in such a manner that it compensates for signal delays caused by the bandpass filters (93, 94) at the inputs of the mixers (105, 106).

3. Control device for a VHF receiver according to one of Claims 1 or 2, characterized in that the signal delay of the delay element (200, 201) corresponds to the signal delay of the bandpass filters (93, 94).

4. Control device for a VHF receiver according to Claim 1, characterized in that the delay element (200) which is connected downstream from the amplitude demodulator (102) has an operational amplifier (V1) whose non-inverting input is connected to earth and whose output is connected via a resistor (R1) to the inverting input, in that the inverting input is connected via a resistor (R2) to that input terminal (E) which is connected via a resistor (R3) to the top of an adjustable voltage divider (P) which is connected to earth and whose tap is connected to the output terminal (A), and in that the top of the voltage divider (P) is connected to the output of the operational amplifier (V1), via a series circuit formed by a capacitor (C1) and a resistor (R4).

5. Control device for a VHF receiver according to Claim 2, characterized in that the delay element (201) which is connected upstream of the amplitude demodulator (102) has a plurality of broadband parallel tuned circuits which are formed by inductances (L11, L12, L13, L14) and capacitors (C11, C12, C13, C14), in that the input terminal (E') is provided with an external connection from a plurality of series-connected capacitors (C21, C22, C23, C24), those connections of the capacitors (C21 to C24) which face away from the input terminal (E') in each case being connected to a tap on the individual inductances (L11 to L14).

## Revendications

1. Dispositif de commande pour un récepteur d'ondes ultracourtes à plusieurs antennes, en particulier pour un véhicule à moteur, dans lequel le signal reçu par chaque antenne est mélangé à une onde porteuse produite dans le récepteur, et les signaux mélangés produits de cette façon (uᵢ) sont additionnés avec une relation de phase pilotable à un signal composé (uₛ) et les relations de phase des signaux mélangés à additionner sont commandées en fonction de la différence de phases entre le signal mélangé correspondant et le signal composé, un discriminateur de phase 95 étant prévu pour chacun des signaux mélangés (uᵢ), auquel on peut amener d'une part le signal mélangé et d'autre part le signal composé par l'intermédiaire chacun d'un filtre passe-bande (93, 94), et le discriminateur de phase présente des signaux de sortie qui sont proportionnels au sinus ou au cosinus de la différence de phases entre le signal mélangé et le signal composé, et un filtre passe-bas (100, 101) est chaque fois intercalé après les sorties, alors qu'entre les sorties du discriminateur de phase et les filtres passe-bas est chaque fois inséré un circuit série se composant d'un mélangeur (105, 106) et d'un circuit de soustraction (107, 108), et d'une part les signaux de sortie des mélangeurs et d'autre part les signaux de sortie du discriminateur de phase pouvant être amenés aux circuits de soustraction, et en outre le signal cumulé, modulé en amplitude, étant amené aux mélangeurs (105, 106),
caractérisé en ce que
le signal cumulé démodulé en amplitude dans un démodulateur (102) à modulation d'amplitude est amené aux mélangeurs (105, 106) via un élément de retard (200), qui est dimensionné de telle façon qu'il compense des retards des signaux provoqués par les filtres passe-bande (93, 94) aux entrées des mélangeurs (105, 106).

2. Dispositif de commande pour un récepteur d'ondes ultracourtes à plusieurs antennes, en particulier pour un véhicule à moteur, dans lequel le signal reçu par chaque antenne est mélangé à une onde porteuse produite dans le récepteur, et les signaux mélangés produits de cette façon (uᵢ), sont additionnés avec une relation de phase pilotable à un signal composé (uₛ) et les relations de phase des signaux mélangés à additionner sont commandées en fonction de la différence de phases entre le signal mélangé correspondant et le signal composé, un discriminateur de phase 95 étant prévu pour chacun des signaux mélangés (uᵢ), auquel on peut amener d'une part le signal mélangé et d'autre part le signal composé par l'intermédiaire chacun d'un filtre passe-bande (93, 94), et le discriminateur de phase présente des signaux de sortie qui sont proportionnels au sinus ou au cosinus de la différence de phases entre le signal mélangé et le signal composé, et un filtre passe-bas (100, 101) est chaque fois intercalé après les sorties, alors qu'entre les sorties du discriminateur de phase et les filtres passe-bas est chaque fois inséré un circuit série se composant d'un mélangeur (105, 106) et d'un circuit de soustraction (107, 108), et d'une part les signaux de sortie des mélangeurs et d'autre part les signaux de sortie du discriminateur de phase pouvant être amenés aux circuits de soustraction, et en outre le signal cumulé, modulé en amplitude étant amené aux mélangeurs (105, 106),
caractérisé en ce qu'
un élément de retard (201) est monté en avant d'un démodulateur à modulation d'amplitude (102) qui produit le signal cumulé, modulé en amplitude, élément de retard qui est dimensionné de telle façon qu'il compense les retards des signaux produits par les filtres passe-bande (93, 94) aux entrées des mélangeurs (105, 106).

3. Dispositif de commande pour un récepteur d'ondes ultracourtes selon l'une des revendications 1 ou 2,
caractérisé en ce que
le retard des signaux réalisé par l'élément de retard (200, 201) correspond au retard de signaux des passe-bande (93, 94).

4. Dispositif de commande pour un récepteur d'ondes ultracourtes selon la revendication 1,
caractérisé en ce que
l'élément de retard (200) intercalé après le modulateur d'amplitude (102) présente un amplificateur opérationnel (VI) dont l'entrée non inverseuse est reliée à la masse et dont la sortie est reliée, via une résistance (R1), à l'entrée inverseuse, en ce que l'entrée inverseuse est reliée, par l'intermédiaire d'une résistance (R2), à une borne d'entrée (E) reliée par l'intermédiaire d'une résistance (R3) au point haut d'un diviseur de tension (P) réglable, se trouvant à la masse, dont la prise est reliée à la borne de sortie (A), et en ce que le point haut du diviseur de tension (P) est relié, par l'intermédiaire d'un circuit inséré se composant d'un condensateur (C1) et d'une résistance (R4), à la sortie de l'amplificateur opérationnel (VI).

5. Dispositif de commande pour un récepteur d'ondes ultracourtes selon la revendication 2,
caractérisé en ce que
l'élément de retard intercalé avant le modulateur d'amplitude (102) présente plusieurs circuits oscillants parallèles à large bande formés des inductances (L11, L12, L13, L14) et des condensateurs (C11, C12, C13, C14), en ce que la borne de sortie (E') est pourvue d'un raccordement extérieur se composant de plusieurs condensateurs montés en série (C21, C22, C23, C24), les raccordements des condensateurs (C21 à C24), situés à l'opposé de la borne d'entrée (E'), étant reliés respectivement à une prise des différentes inductances (L11 à L14).
